# EUROPÄISCHE PATENTSCHRIFT

(11) **EP 2 555 012 B1**
(45) Veröffentlichungstag und Bekanntmachung des Hinweises auf die Patenterteilung: **23.07.2014**
(21) Anmeldenummer: 11006315.3
(22) Anmeldetag: 01.08.2011
(51) Int. Cl.: G01S 7/40

(54) **Abtastradar mit anpassbarer Vertikalausrichtung**
Scanning radar with adjustable vertical alignment
Radar d'exploration ayant une orientation verticale adaptable

(43) Veröffentlichungstag der Anmeldung: 06.02.2013
(73) Patentinhaber: Delphi Technologies, Inc., Troy MI 48007 (US)
(72) Erfinder: Fischer, Thomas, 57482 Wenden (DE); Hofmann, Frank, 42653 Solingen (DE); Fründ, Marcel, 42859 Remscheid (DE)
(74) Vertreter: Robert, Vincent

(56) Entgegenhaltungen:
- DE-A1- 10 025 501
- DE-A1- 19 934 197
- DE-A1- 19 957 186
- US-A- 5 142 455

## Beschreibung

Die Erfindung betrifft einen Abtastradar für ein Kraftfahrzeug, dessen Ausrichtung bezüglich einer Halterung anpassbar ist.

Ein elektronisches Abtastradar wird in Sicherheits- und Assistenzsystemen von Fahrzeugen verwendet, wenn eine Ortung von Gegenständen und Hindernissen in einem Raumbereich vor einem Fahrzeug erforderlich ist. Es sind Abtastradarsysteme bekannt, mit denen eine Vielzahl von Zielobjekten vor dem Fahrzeug bezüglich deren Abstand und Geschwindigkeit mit ausreichender Auflösung gleichzeitig erfasst werden kann. Die Sicherheits- und Assistenzsysteme, in die ein Abtastradar eingebunden sein kann, sind beispielsweise adaptive Tempomat- und Bremsunterstützungssysteme sowie Kollisionswarnsysteme.

Das Abtastradar benötigt eine Möglichkeit, die vertikale Ausrichtung einer Radareinrichtung, die Radarwellen sendet und empfängt, bezogen auf die Straßenoberfläche einzustellen, um eine Beladung des Fahrzeugs oder eine Regelung des Chassisrahmens zu kompensieren, falls diese an dem Fahrzeug vorgesehen ist. Zu diesem Zweck werden derzeit elektronische Schrittmotoren verwendet, die komplexe Getriebemechanismen aufweisen.

Ein Nachteil von elektronischen Schrittmotoren mit komplexem Getriebemechanismus ist, dass diese störungsanfällig sind und dadurch eine begrenzte Lebensdauer im Vergleich zur Lebensdauer eines Fahrzeugs aufweisen. Ferner sind solche Schrittmotoren mit komplexem Getriebemechanismus für eine Verwendung in serienmäßigen Fahrzeugen zu teuer. Aus der DE 199 34 197 A1 ist ein Abtastradar für ein Kraftfahrzeug gemäß dem Oberbegriff des Anspruchs 1 bekannt, bei dem jedoch zum Verstellen der Radareinrichtung ein Schrittmotor verwendet wird.

Die US 5 142 455 A beschreibt einen Fahrzeugscheinwerfer, der in einer Ebene zwischen zwei Positionen verschiebbar ist.

Es ist die Aufgabe der vorliegenden Erfindung, einen Abtastradar zu schaffen, dessen vertikale Ausrichtung bezüglich einer Straßenoberfläche mit einer einfachen, kostengünstigen Einrichtung verstellbar ist.

Diese Aufgabe wird gelöst durch ein Abtastradar mit den Merkmalen des Anspruchs 1 und insbesondere dadurch, dass das Abtastradar zumindest einen Aktuator aufweist, der zwischen zwei oder drei Positionen verstellbar ist und mit der Radareinrichtung zum Senden und Empfangen von Radarwellen derart mechanisch gekoppelt ist, dass eine Verstellung des Aktuators zwischen den zwei oder drei Positionen die Ausrichtung der Radareinrichtung bezüglich deren Halterung verändert und dadurch die Winkelausrichtung der Radareinrichtung entsprechend den zwei oder drei Positionen des Aktuators verstellt.

Da lediglich erforderlich ist, dass der Aktuator zwischen zwei oder drei Positionen verstellbar und mit der Radareinrichtung mechanisch gekoppelt ist, bestehen geringe Anforderungen an den Hub- und/oder Kippaktuator, so dass ein kostengünstiger, robuster Aktuator mit langer Lebensdauer verwendbar ist. Da eine herkömmliche Radareinrichtung einen gewissen Winkelbereich erfasst, beispielsweise von ±2°, kann eine diskrete Umschaltung bzw. Neigung der Radareinrichtung mit wenigen Stufen bezüglich der Horizontalen im Gegensatz zu einer kontinuierlichen Verstellung durch Schrittmotoren in Kauf genommen werden, solange sichergestellt ist, dass ein geeigneter Winkelbereich erfasst wird.

Die Verstellung der Radareinrichtung mittels des Aktuators in wenigen diskreten Stufen erfordert außerdem im Vergleich zu einer kontinuierlichen Nachregelung der Radarposition mittels eines Schrittmotors erheblich weniger Schaltvorgänge. Dadurch wird der Aktuator weniger stark beansprucht als ein Schrittmotor, so dass die Lebensdauer des Aktuators verlängert wird.

Der Abtastradar kann zwei Aktuatoren sowie ein Rückstellelement aufweisen, das beispielsweise eine Feder sein kann. Die beiden Aktuatoren verstellen die Radareinrichtung jeweils aus der Ruhelage in die nach oben bzw. nach unten gekippte Position. Das Rückstellelement stellt die Radareinrichtung in die Ruhelage zurück. Dies gestattet eine symmetrische Anordnung der beiden Aktuatoren bezüglich der Ruhelage und die Verwendung einfacher, kostengünstiger Aktuatoren.

Alternativ können anstelle der beiden Aktuatoren ein einziger Aktuator, der in drei Positionen einstellbar ist, und ein entsprechendes Rückstellelement verwendet werden. Der einzelne Aktuator mit drei Einstellpositionen kann dabei bezogen auf das Rückstellelement an der entgegengesetzten Seite der Radareinrichtung angeordnet sein. Durch die Verwendung eines einzigen Aktuators ist wiederum ein kompakter Aufbau mit geringem Platzbedarf möglich.

Die mechanische Kopplung des Aktuators mit der Radareinrichtung kann beispielsweise als direkte Kopplung ohne dazwischen liegende Elemente ausgeführt werden. Somit kann die mechanische Kopplung des Aktuators mit der Radareinrichtung ebenfalls kostengünstig erreicht werden.

Vorteilhafte Ausbildungen der Erfindung sind den Unteransprüchen, der Beschreibung und den Zeichnungen zu entnehmen.

Vorzugsweise ist ein mechanisches Kopplungselement zwischen dem Aktuator und der Radareinrichtung angeordnet, das eine lineare Bewegung des Aktuators in eine Kippbewegung der Radareinrichtung überträgt. Dies verringert nochmals die Anforderungen an den Aktuator, der zwischen den zwei oder drei Positionen lediglich linear verschiebbar zu sein braucht.

Der zumindest eine Aktuator ist bevorzugt in drei Positionen einstellbar, die bezogen auf eine horizontale Richtung einer Ruheposition, einer nach oben gekippten Position und einer nach unten gekippten Position der Radareinrichtung entsprechen. Dabei entspricht die Ruheposition einer Ausrichtung der Radareinrichtung für ein unbeladenes Fahrzeug bzw. für eine Standardeinstellung des Chassis. Die beiden weiteren Positionen gestatten eine Anpassung der vertikalen Ausrichtung der Radareinrichtung, die davon abhängt, ob die Beladung des Fahrzeugs in dessen vorderem oder hinterem Teil größer ist bzw. ob eine Verstellung der Chassiseinstellung im vorderen oder hinteren Teil des Fahrzeugs erfolgt. Wenn der Aktuator in die drei genannten Positionen einstellbar ist, ist die vertikale Ausrichtung der Radareinrichtung somit flexibel an verschiedene Beladungsszenarien des Fahrzeugs anpassbar.

Gemäß einer Ausführungsform des Abtastradars weist dieser einen einzigen Aktuator auf. Dies ist eine einfache und kompakte Ausführung mit geringem Platzbedarf. Bei einer alternativen Ausführungsform sind zwei Aktuatoren vorgesehen, die jeweils in zwei Positionen einstellbar sind und die Ausrichtung der Radareinrichtung bezüglich der Halterung jeweils in unterschiedlichen Winkelbereichen verändern, die beispielsweise eine Größe von 4° aufweisen. Dadurch kann die vertikale Ausrichtung des Abtastradars über einen größeren Winkelbereich verändert werden, als wenn nur ein Aktuator verwendet wird, was eine noch flexiblere Anpassung der Ausrichtung der Radareinrichtung an die Beladung des Fahrzeugs ermöglicht.

Ferner ist bevorzugt ein weiterer Aktuator vorgesehen, der die Radareinrichtung in der nach oben bzw. nach unten gekippten Position hält. Dabei stellt das Rückstellelement die Radareinrichtung vorteilhafterweise nur dann in die Ruhelage zurück, wenn dieser zusätzliche Aktuator zum Halten der nach oben bzw. nach unten gekippten Position deaktiviert ist. Die Verwendung eines weiteren Aktuators zum Halten einer gekippten Position verringert wiederum die Anforderungen an die Aktuatoren, so dass kostengünstige Aktuatoren verwendet werden können.

Die Radareinrichtung kann einen Winkelbereich von etwa -2° bis +2° bezüglich der horizontalen Richtung erfassen, und die nach oben bzw. die nach unten gekippte Position kann jeweils um etwa 4° bezüglich der horizontalen Richtung geneigt sein. Dadurch ist mittels der Verstellung der Winkelausrichtung der Radareinrichtung ein Winkelbereich von etwa -6° bis + 6° bezüglich horizontalen Richtung erfassbar. Somit kann mittels der Radareinrichtung ein relativ großer Winkelbereich abgedeckt werden, indem ein oder zwei kostengünstige Aktuatoren verwendet werden, die eine diskrete Verstellung der Winkelausrichtung der Radareinrichtung mit lediglich drei Stufen ermöglichen.

Kostengünstige Aktuatoren können beispielsweise ein Solenoid und/oder ein Piezoelement aufweisen. Dabei ist der Aktuator bevorzugt ohne ein dazwischen liegendes Getriebe mit der Radareinrichtung gekoppelt. Die Kopplung des Aktuators mit der Radareinrichtung erfolgt somit auf einfache, kostengünstige Weise, beispielsweise durch eine direkte Kopplung des Aktuators mit der Radareinrichtung ohne dazwischen liegende Elemente.

Die Erfindung wird nachfolgend anhand vorteilhafter Ausführungsformen unter Bezugnahme auf die Zeichnungen erläutert. Es zeigen:
- Fig. 1: eine Radareinrichtung, die in einer Halterung befestigt ist,
- Fig. 2: eine schematische Seitenansicht eines erfindungsgemäßen Abtastradars mit einer Radareinrichtung und einem Aktuator und
- Fig. 3: einen erfindungsgemäßen Abtastradar in einer Ruheposition sowie in zwei vertikal gekippten Positionen.

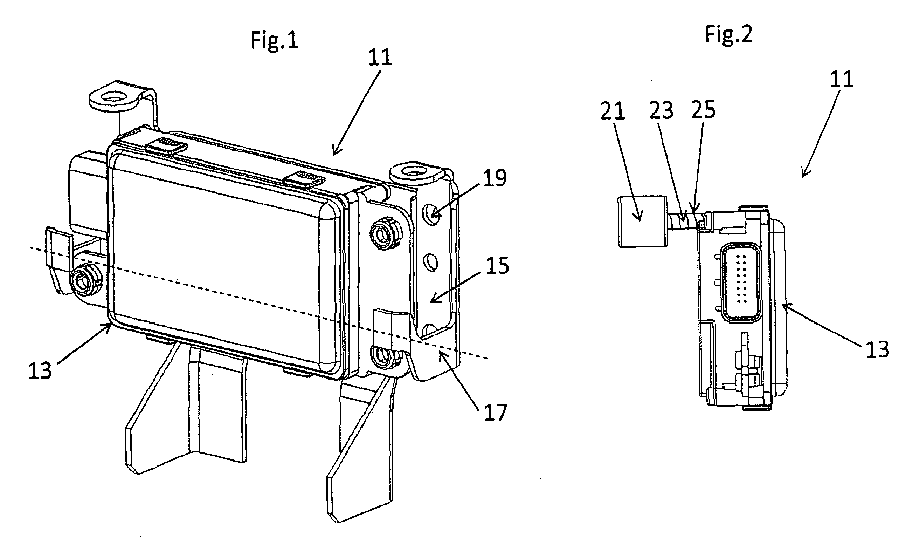

In Fig. 1 ist ein Abtastradar 11 dargestellt, der eine Radareinrichtung 13 aufweist, die in einer Halterung 15 drehbar gelagert ist. Die Radareinrichtung 13 ist bezüglich der Halterung 15 um eine Drehachse 17 in einem kleinen Winkelbereich verstellbar. Dadurch kann in noch zu beschreibender Weise die vertikale Ausrichtung der Radareinrichtung 13, beispielsweise bezogen auf eine Straßenoberfläche, und dadurch die horizontale Ausrichtung der Radarwellen angepasst werden, die von der Radareinrichtung 13 emittiert und empfangen werden.

Die Radareinrichtung 13 erfasst üblicherweise ohne weitere Verstellmöglichkeit einen Winkelbereich von 4°, beispielsweise bezüglich einer zur Straßenoberfläche parallelen Richtung einen Bereich von ±2°. Die Halterung 15 der Radareinrichtung 13 ist mit Hilfe von Befestigungslöchern 19 an einem nicht dargestellten Fahrzeug befestigbar.

Wenn die Neigung des Fahrzeugchassis, an dem der Abtastradar 11 üblicherweise befestigt ist, beispielsweise durch eine Beladung des Fahrzeugs oder eine aktive Regelung des Chassis verändert wird, ändert sich auch der Winkel bezüglich der Straßenoberfläche, unter dem die Radareinrichtung 13 die Radarwellen emittiert. Der Winkelbereich, den die Radareinrichtung 13 erfasst, kann dadurch in vertikaler Richtung derart verschoben werden, dass dieser für eine Anwendung in Sicherheits- und Assistenzsystemen, die eine Detektion von Fremdobjekten erfordern, ungünstig oder sogar nicht mehr geeignet ist. Die vertikale Ausrichtung der Radareinrichtung 13 sollte daher einstellbar sein, um dadurch die horizontale Ausrichtung der Radarwellen an den Beladungszustand des Fahrzeugs bzw. die Einstellung des Chassis anpassen zu können.

Fig. 2 zeigt eine schematische Seitenansicht des erfindungsgemäßen Abtastradars 11, bei dem auf der Rückseite der Radareinrichtung 13 ein Hub- und/oder Kippaktuator 21 angeordnet ist, der durch ein mechanisches Kopplungselement 23, beispielsweise einen Hebel, mit der Radareinrichtung 13 mechanisch gekoppelt ist. Wie in Fig. 1 ist die Radareinrichtung 13 in der in Fig. 2 nicht dargestellten Halterung 15 drehbar gelagert. Ferner ist auf der Rückseite der Radareinrichtung 13 ein Rückstellelement 25 in der Form einer Feder dargestellt, mit dem die Radareinrichtung 13 wieder in eine Ruheposition zurückgestellt werden kann.

Der Hub- und/oder Kippaktuator 21 ist in einer linearen Bewegung zwischen zwei oder drei Positionen stufenweise verstellbar. Für die Verstellung zwischen diesen zwei oder drei Positionen weist der Hub- und/oder Kippaktuator 21 ein Solenoid und/oder ein Piezoelement auf. Anstelle des Hub- und/oder Kippaktuators 21 kann auch eine andere Einrichtung verwendet werden, wie beispielsweise ein Motor, der die Radareinrichtung zwischen zwei oder drei diskreten Positionen verstellt.

Die lineare Bewegung des Hub- und/oder Kippaktuators 21 wird mittels des mechanischen Kopplungselements 23 in eine Dreh- oder Kippbewegung der Radareinrichtung 13 überführt. Dadurch ist die Radareinrichtung 13 bezüglich einer vertikalen Richtung, die beispielsweise rechtwinklig zur Straßenoberfläche verläuft, in zwei oder drei Positionen einstellbar, die den Positionen des Hub- und/oder Kippaktuators 21 entsprechen: in eine Ruheposition und in eine oder zwei bezüglich der vertikalen Richtung gekippte Positionen. Durch diese Neigung der Radareinrichtung 13 wird auch der Winkelbereich von ±2° bezüglich der horizontalen Richtung parallel zur Straßenoberfläche, der durch die Radareinrichtung 13 erfasst werden kann, in entsprechender Weise gekippt.

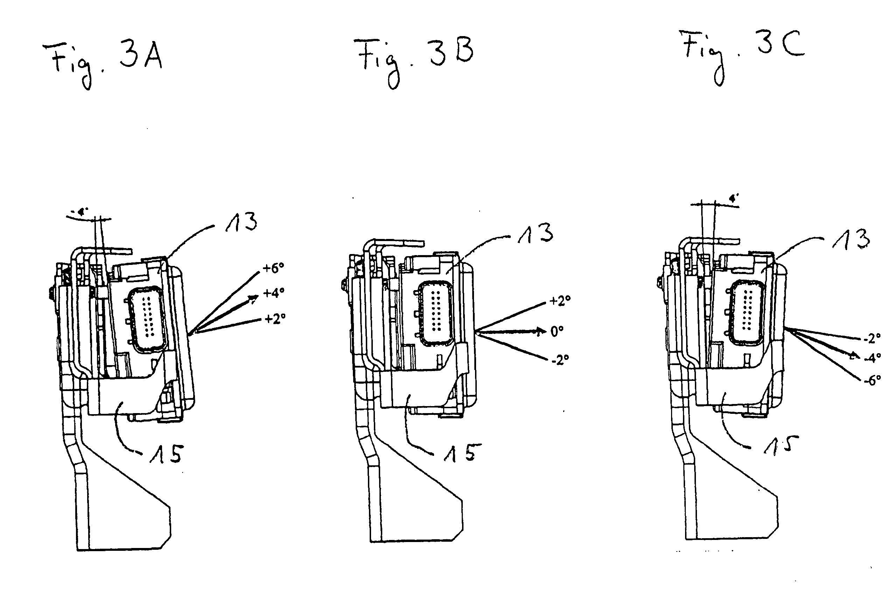

Die vertikale Ausrichtung der Radareinrichtung 13 bezüglich der Halterung 15 mittels des Hub- und/oder Kippaktuators 21 ist in Fig. 3 detaillierter dargestellt. In Fig. 3B befindet sich der Hub- und/oder Kippaktuator 21 und somit auch die Radareinrichtung 13 in der Ruheposition. Diese emittiert Radarwellen parallel zur Straßenoberfläche in horizontaler Richtung, was durch den Pfeil bei 0° dargestellt ist. Durch die Winkelaufweitung der Radarwellen von ±2° ist ein Winkelbereich von 4° erfassbar. Die Ruheposition von Fig. 3B entspricht einem unbeladenen Fahrzeug bzw. einem Zustand, bei dem das Chassis eines Fahrzeugs parallel zur Straßenoberfläche ausgerichtet ist.

Wenn das Fahrzeug beladen wird oder das Chassis des Fahrzeugs durch eine entsprechende Regelung gekippt wird, wird die Vorderseite der Radareinrichtung 13 beispielsweise aus der Vertikalen nach unten in Richtung der Straßenoberfläche gekippt. Damit die Radareinrichtung 13 weiterhin ungefähr denselben Winkelbereich erfassen kann, wird der Hubund/oder Kippaktuator 21 aktiviert und die Radareinrichtung 13 bezüglich der Halterung 15 um etwa -4° nach oben gekippt, wie es in Fig. 3A dargestellt ist. Diese nach oben gekippte Position von Fig. 3A kompensiert somit die Neigung des Fahrzeugchassis durch die Beladung, so dass der mittlere Strahl der Radarwellen bei +4° wieder ungefähr in horizontaler Richtung verläuft, d.h. ungefähr parallel zur Straßenoberfläche.

Durch die Beladung des Fahrzeugs bzw. die Regelung des Chassis ist es auch möglich, dass die Radareinrichtung 13 in entgegengesetzter Richtung gekippt wird. Dies tritt beispielsweise auf, wenn die Beladung des Fahrzeugs stärker in dessen vorderem Teil und nicht im hinteren Teil erfolgt. Um auch diese Neigung der Radareinrichtung 13 in entgegengesetzter Richtung (bezogen auf Fig. 3A) zu kompensieren, ist entweder ein weiterer Hub- und/oder Kippaktuator 21 erforderlich, oder es wird ein Hub- und/oder Kippaktuator 21 mit zumindest drei Stufen benötigt.

In diesem Fall wird die Radareinrichtung 13 um 4° mittels des Hubund/oder Kippaktuators 21 oder zweier entsprechender Aktuatoren 21 nach vorne bzw. nach unten gekippt, um dadurch die Neigung der Radareinrichtung, die durch die Beladung bzw. Chassisregelung hervorgerufen wird, derart zu kompensieren, dass nunmehr der mittlere Strahl bei -4° ungefähr parallel zur horizontalen Richtung, d.h. zur Straßenoberfläche, verläuft. Insgesamt ist somit durch die Anpassung der vertikalen Ausrichtung der Radareinrichtung 13 ein Winkelbereich von -6° bis +6° bezogen auf die horizontale Richtung verfügbar, innerhalb dessen die Radareinrichtung 13 angepasst werden kann.

Um die Radareinrichtung 13 aus der Ruheposition in die nach oben gekippte Position und in die nach unten gekippte Position zu verstellen, sind gemäß einer Ausführungsform zwei Hub- und/oder Kippaktuatoren in Form von zwei Solenoiden vorgesehen, welche die Radareinrichtung 13 bezüglich der Ruheposition bei 0° symmetrisch um -4° bzw. +4° kippen.

Dabei kann ein weiteres Solenoid vorgesehen sein, um die Radareinrichtung 13 jeweils in der gekippten Position zu halten. Das Zurückstellen in die Ruhelage erfolgt jeweils durch eine Feder 25, wenn das Solenoid zum Halten der ausgelenkten Position deaktiviert wird.

Alternativ kann der Hub- und/oder Kippaktuator 21 ein Solenoid mit drei Stufen aufweisen, um die Radareinrichtung 13 bezüglich der vertikalen Richtung zu kippen. Hierbei befindet sich die Ruheposition beispielsweise bei -4°, d.h. sie entspricht der in Fig. 3C dargestellten Position. Mittels des Solenoids wird die Radareinrichtung bezüglich der vertikalen Richtung in eine Position bei 0° und eine weitere Position bei +4° ausgelenkt, um dadurch die Ausrichtung der Radarwellen bezüglich der horizontalen Richtung anzupassen, wie zuvor beschrieben wurde. Auch bei dieser alternativen Ausführungsform kann ein weiteres Solenoid zum Halten der ausgelenkten Positionen vorgesehen sein. Durch eine oder mehrere Federn 25, die in diesen ausgelenkten Positionen vorgespannt sind, wird die Radareinrichtung 13 wieder in die Ruhelage bei -4° zurückgestellt, wenn das Solenoid zum Halten der ausgelenkten Positionen deaktiviert wird.

Die Ansteuerung des Hub- und/oder Kippaktuators 21 erfolgt beispielsweise mit einem Signal, das den Neigungswinkel des Fahrzeugchassis bezüglich auf die Straßenoberfläche erfasst und das mit einem entsprechenden, nicht dargestellten Sensor gemessen wird. Überschreitet die Neigung des Fahrzeugchassis einen oder mehrere vorbestimmte Schwellenwerte (z.B. -2° oder +2°), verstellt der Hub- und/oder Kippaktuator 21 die Ausrichtung der Radareinrichtung 13 bezogen auf die vertikale Richtung in entgegengesetzter Drehrichtung, um eine mögliche Fehlausrichtung der Radarwellen bezogen auf die Horizontale entsprechend zu kompensieren. Alternativ zu dem vorstehend genannten Sensorsignal kann die Radareinrichtung 13 auch kurzzeitig aus der Ruhelage in andere Positionen gekippt werden, beispielsweise aus der in Fig. 3B gezeigten Ruheposition in die nach oben und die nach unten gekippte Position, um die Position mit dem maximalen Reflexionssignal der Radareinrichtung 13 zu ermitteln und um die Radareinrichtung 13 anschließend dauerhaft in diese Position einzustellen.

Somit wird eine Vorrichtung zur Anpassung der vertikalen Ausrichtung der Radareinrichtung 13 geschaffen, bei der die Radareinrichtung 13 mit Hilfe von kostengünstigen Hub- und/oder Kippaktuatoren 21 zwischen zwei oder drei Positionen anpassbar ist. Die Umschaltung der vertikalen Ausrichtung der Radareinrichtung 13 zwischen zwei oder mehr diskreten Stufen ermöglicht zwar keine derart exakte Kompensation der Fahrzeugzuladung wie bei der Verwendung von Schrittmotoren. Da die Radareinrichtung 13 an sich jedoch bereits einen Winkelbereich von etwa 4° erfasst, ist auch bei einer diskreten Umschaltung der Winkelausrichtung zwischen nur drei Stufen, wie sie in Fig. 3A - C dargestellt ist, die Intensität der reflektierten Radarwellen in den meisten Fällen ausreichend, um die Signale des Abtastradars in Sicherheits- und Assistenzsystemen von Fahrzeugen verwenden zu können. Wie in Fig. 3A - C gezeigt ist, lässt sich mit kostengünstigen Aktuatoren beispielsweise ein Winkelbereich von -6° bis +6° abdecken, der für die Kompensation der Zuladung bzw. der Chassisregelung im Allgemeinen ausreichend ist.

### Bezugszeichenliste

- 11: Abtastradar
- 13: Radareinrichtung
- 15: Halterung
- 17: Drehachse
- 19: Befestigungsloch
- 21: Hub- und/oder Kippaktuator
- 23: mechanisches Kopplungselement
- 25: Rückstellelement

## Patentansprüche

1. Abtastradar (11) für ein Kraftfahrzeug mit
einer Radareinrichtung (13) zum Senden und Empfangen von Radarwellen, die mit einer veränderbaren Ausrichtung bezüglich einer Halterung (15) an dieser befestigt ist,
zumindest einem Aktuator (21), der zwischen zwei oder drei Positionen stufenweise verstellbar ist,
wobei der zumindest eine Aktuator (21) mit der Radareinrichtung (13) derart mechanisch gekoppelt ist, dass eine Verstellung des zumindest einen Aktuators (21) zwischen den zwei oder drei Positionen die Ausrichtung der Radareinrichtung (13) bezüglich der Halterung (15) verändert und dadurch die Winkelausrichtung der Radareinrichtung (13) entsprechend den zwei oder drei Positionen des Aktuators (21) verstellt,
**dadurch gekennzeichnet,**
**dass** die Radareinrichtung (13) mittels des zumindest einen Aktuators (21) in drei diskrete Positionen einstellbar ist, die bezogen auf eine horizontale Richtung einer Ruheposition, einer nach oben gekippten Position und einer nach unten gekippten Position der Radareinrichtung (13) entsprechen, und
**dass** der Abtastradar (11) zwei Aktuatoren (21), welche die Radareinrichtung (13) jeweils aus der Ruhelage in die nach oben gekippte Position bzw. in die nach unten gekippte Position verstellen, oder einen Aktuator (21) aufweist, der in drei Positionen verstellbar ist und die Radareinrichtung (13) aus der Ruhelage in die nach oben gekippte Position und in die nach unten gekippte Position verstellt, sowie ein Rückstellelement (25), das die Radareinrichtung (13) in die Ruhelage zurückstellt.

2. Abtastradar (11) nach Anspruch 1,
**dadurch gekennzeichnet, dass** ein mechanisches Kopplungselement (23) zwischen dem zumindest einen Aktuator (21) und der Radareinrichtung (13) angeordnet ist, welches eine lineare Bewegung des Aktuators (21) in eine Kippbewegung der Radareinrichtung (13) überträgt.

3. Abtastradar (11) nach Anspruch 1 oder 2,
**dadurch gekennzeichnet, dass** dieser zumindest zwei Aktuatoren (21) aufweist, die jeweils in zwei Positionen einstellbar sind und die Ausrichtung der Radareinrichtung (13) bezüglich der Halterung (15) jeweils in unterschiedlichen Winkelbereichen verändern.

4. Abtastradar (11) nach Anspruch 3,
**dadurch gekennzeichnet, dass** die unterschiedlichen Winkelbereiche jeweils eine Größe von etwa 4° aufweisen.

5. Abtastradar (11) nach Anspruch 1,
**dadurch gekennzeichnet, dass** dieser einen weiteren Aktuator (21) zum Halten der nach oben oder nach unten gekippten Position der Radareinrichtung (13) aufweist.

6. Abtastradar (11) nach Anspruch 5,
**dadurch gekennzeichnet, dass** das Rückstellelement (25) die Radareinrichtung (13) in die Ruhelage zurückstellt, wenn der Aktuator (21) zum Halten der nach oben oder nach unten gekippten Position deaktiviert ist.

7. Abtastradar (11) nach zumindest einem der vorstehenden Ansprüche,
**dadurch gekennzeichnet, dass** das Rückstellelement (25) eine Feder ist.

8. Abtastradar (11) nach zumindest einem der vorstehenden Ansprüche,
**dadurch gekennzeichnet, dass** die Radareinrichtung (13) einen Winkelbereich von etwa -2° bis +2° bezüglich der horizontalen Richtung erfasst und die nach oben bzw. nach unten gekippte Position jeweils um etwa 4° bezüglich der horizontalen Richtung geneigt ist, so dass durch die Verstellung der Winkelausrichtung der Radareinrichtung (13) ein Winkelbereich von etwa -6° bis + 6° bezüglich horizontalen Richtung erfassbar ist.

9. Abtastradar (11) nach zumindest einem der vorstehenden Ansprüche,
**dadurch gekennzeichnet, dass** der Aktuator (21) ein Solenoid aufweist.

10. Abtastradar (11) nach zumindest einem der vorstehenden Ansprüche,
**dadurch gekennzeichnet, dass** der Aktuator (21) ein Piezoelement aufweist.

11. Abtastradar (11) nach zumindest einem der vorstehenden Ansprüche,
**dadurch gekennzeichnet, dass** der Aktuator (21) mit der Radareinrichtung (13) ohne ein dazwischen liegendes Getriebe gekoppelt ist.

## Claims

1. Scanning radar (11) for a motor vehicle with
a radar device (13) for transmitting and receiving radar waves, which is mounted to a retainer (15) with a variable orientation thereto,
at least one actuator (21) which is adjustable stepwise between two or three positions,
wherein the at least one actuator (21) is mechanically coupled to the radar device (13) such that an adjustment of the at least one actuator (21) between the two or three positions alters the orientation of the radar device in relation to the retainer (15) and thereby adjusts the angular orientation of the radar device (13) corresponding to the two or three positions of the actuator (21),
**characterized in that**
the radar device (13) is adjustable by means of the at least one actuator (21) into three discrete positions corresponding to a rest position, an upwardly tilted position and a downwardly tilted position of the radar device (13) in relation to a horizontal direction, and
the scanning radar (11) comprises two actuators (21) which adjust the radar device (13) from the rest position into the upwardly tilted position and in the downwardly tilted position, respectively, or an actuator (21) adjustable into three positions and adjusting the radar device (13) from the rest position into the upwardly tilted position and the downwardly tilted position, and a return element (25) which returns the radar device (13) into the rest position.

2. Scanning radar (11) according to claim 1,
**characterized in that**
a mechanical coupling element (23) is arranged between the at least one actuator (21) and the radar device (13), which translates a linear movement of the actuator (21) into a tilting movement of the radar device (13).

3. Scanning radar (11) according to claim 1 or 2,
**characterized in that**
the scanning radar comprises at least two actuators (21) which are adjustable in two positions respectively and alter the orientation of the radar device (13) in relation to the retainer (15) in different angular ranges respectively.

4. Scanning radar (11) according to claim 3,
**characterized in that**
the different angular ranges each comprise a size of about 4°.

5. Scanning radar (11) according to claim 1,
**characterized in that**
the scanning radar comprises a further actuator (21) for holding the upwardly or downwardly tilted position of the radar device (13).

6. Scanning radar (11) according to claim 5,
**characterized in that**
the return element (25) returns the radar device (13) to the rest position when the actuator (21) for holding the upwardly or downwardly tilted position is disabled.

7. Scanning radar (11) according to at least one of the preceding claims,
**characterized in that**
the return element (25) is a spring.

8. Scanning radar (11) according to at least one of the preceding claims,
**characterized in that**
the radar device (13) detects an angle ranging from about -2° to +2° in relation to the horizontal direction and the upwardly and downwardly tilted position is each tilted by about 4° in relation to the horizontal direction, such that by adjusting the angular orientation of the radar device (13) an angle ranging from about -6° to + 6° in relation to the horizontal direction is detectable.

9. Scanning radar (11) according to at least one of the preceding claims,
**characterized in that**
the actuator (21) comprises a solenoid.

10. Scanning radar (11) according to at least one of the preceding claims,
**characterized in that**
the actuator (21) comprises a piezo element.

11. Scanning radar (11) according to at least one of the preceding claims,
**characterized in that**
the actuator (21) is coupled to the radar device (13) without any intermediate transmission.

## Revendications

1. Radar d'exploration (11) pour un véhicule automobile, comprenant
un système radar (13) pour émettre et recevoir des ondes radar, qui est fixé sur une monture (15) avec une orientation modifiable par rapport à celle-ci,
au moins un actionneur (21), qui est déplaçable par étapes entre deux ou trois positions,
dans lequel ledit au moins un actionneur (21) est couplé mécaniquement avec le système radar (13) de telle façon qu'un déplacement dudit au moins un actionneur (21) entre lesdites deux ou trois positions modifie l'orientation du système radar (13) par rapport à la monture (15) et déplace de ce fait l'orientation angulaire du système radar (13) en correspondance des deux ou trois positions de l'actionneur (21),
**caractérisé en ce que**
le système radar (13) est réglable au moyen dudit au moins un actionneur (21) dans trois positions discrètes qui, par référence à une direction horizontale, correspondent à une position de repos, à une position basculée vers le haut, et à une position basculée vers le bas, du système radar (13), et
le radar d'exploration (11) comprend deux actionneurs (21) qui déplacent le système radar (13) hors de la position de repos jusque dans la position basculée vers le haut ou respectivement jusque dans la position basculée vers le bas, ou bien un seul actionneur (21) qui est déplaçable dans trois positions et qui déplace le système radar (13) hors de la position de repos jusque dans la position basculée vers le haut et jusque dans la position basculée vers le bas, ainsi qu'un élément de rappel (25) qui rappelle le système radar (13) jusque dans la position de repos.

2. Radar d'exploration (11) selon la revendication 1,
**caractérisé en ce qu'**un élément d'accouplement mécanique (23) est agencé entre ledit au moins un actionneur (21) et le système radar (13), qui transmet un mouvement linéaire de l'actionneur (21) en un mouvement de basculement du système radar (13).

3. Radar d'exploration (11) selon la revendication 1 ou 2,
**caractérisé en ce que** celui-ci comprend au moins deux actionneurs (21), lesquels sont réglables respectivement dans deux positions et modifient l'orientation du système radar (13) par rapport à la monture (15) respectivement dans des plages angulaires différentes.

4. Radar d'exploration (11) selon la revendication 3,
**caractérisé en ce que** les plages angulaires différentes présentent respectivement une taille d'environ 4°.

5. Radar d'exploration (11) selon la revendication 1,
**caractérisé en ce que** celui-ci comprend un autre actionneur (21) pour le maintien de la position du système radar (13) basculée vers le haut ou basculée vers le bas.

6. Radar d'exploration (11) selon la revendication 5,
**caractérisé en ce que** l'élément de rappel (25) rappelle le système radar (13) jusque dans la position de repos quand l'actionneur (21) destiné à maintenir la position basculée vers le haut ou basculée vers le bas est désactivé.

7. Radar d'exploration (11) selon l'une au moins des revendications précédentes,
**caractérisé en ce que** l'élément de rappel (25) est un ressort.

8. Radar d'exploration (11) selon l'une au moins des revendications précédentes,
**caractérisé en ce que** le système radar (13) couvre une plage angulaire d'environ -2° à +2° par rapport à la direction horizontale, et la position basculée vers le haut et la position basculée vers le bas sont inclinées respectivement d'environ 4° par rapport à la direction horizontale, de sorte que, par le déplacement de l'orientation angulaire du système radar (13) une plage angulaire d'environ -6° à +6° par rapport à la direction horizontale peut être couverte.

9. Radar d'exploration (11) selon l'une au moins des revendications précédentes,
**caractérisé en ce que** l'actionneur (21) comprend un solénoïde.

10. Radar d'exploration (11) selon l'une au moins des revendications précédentes,
**caractérisé en ce que** l'actionneur (21) comprend un élément piézoélectrique.

11. Radar d'exploration (11) selon l'une au moins des revendications précédentes,
**caractérisé en ce que** l'actionneur (21) est couplé avec le système radar (13) sans l'intermédiaire d'un mécanisme disposé entre eux.
